# EUROPEAN PATENT SPECIFICATION

(11) **EP 1 364 174 B1**
(45) Date of publication and mention of the grant of the patent: **17.09.2008**
(21) Application number: 02709157.8
(22) Date of filing: 24.01.2002
(51) Int. Cl.: F25B 45/00

(54) **REFRIGERATION MANIFOLD**
KÜHLVERTEILER
COLLECTEUR DE REFRIGERATION

(30) Priority: 26.01.2001 US 264526 P; 11.01.2002 US 44891
(43) Date of publication of application: 26.11.2003
(73) Proprietor: STRIDE TOOL INC., Chagrin Falls, OH 44022 (US)
(72) Inventor: RAKOWSKI, Tom, J., Northbrook, IL 60062 (US); DUBINSKY, Miles, J., Carol Stream, IL 60188 (US); TERRY, James A., Indianapolis, Indiana (US)
(74) Representative: Parnham, Kevin
(86) International application number: PCT/US2002/002095
(87) International publication number: WO 2002/059533

(56) References cited:
- US-A- 2 375 646
- US-A- 3 785 163
- US-A- 3 916 641
- US-A- 4 506 423
- US-A- 4 516 603
- US-A- 5 558 124
- US-A- 5 638 689
- US-A- 5 715 692

## Description

### Technical Field

This invention relates to a device for charging a system , which in operation effect heat transfer through cyclically changing a refrigerant between liquid and vapor states, and a process of charging a heat exchange mechanism with refrigerant.

### Background Art

Many air conditioning, refrigeration and heat pump systems utilize refrigerants to effect heat transfer. Typically, the refrigerant is from a class of fluids known as freon. The heat transfer is effected by compressing a refrigerant in its gaseous state to liquefy it and in the process release heat energy, In the case of refrigeration or air conditioning a heat exchanger dissipates the released heat to an ambient atmosphere. The liquid refrigerant is flowed to another heat exchanger which is in heat absorbing relationship with a space to be cooled. The refrigerant is allowed to expand and vaporize to absorb heat via the second heat exchanger.

In a refrigerator, for example, a compressor unit disposed outside a refrigerated compartment, is used to compress the refrigerant from its vapor state to a liquid state and thereby dispel heat to the ambient atmosphere. Liquid refrigerant is delivered to a cooling heat exchanger in communication with an atmosphere within the refrigeration chamber. The refrigerant is allowed to vaporize within the cooling heat exchanger and thereby absorb heat from the atmosphere within the chamber.

The systems which use refrigerant for heat transfer from time to time must be serviced by a process known as charging. With the charging process, a manifold is connected to the system being recharged and to a source of refrigerant. When the system is being fully recharged it typically is evacuated and then the refrigerant is delivered in liquid form via the manifold to the system. For top-off, the refrigerant is charged in its vapor state.

Heretofore, such recharging has typically used a manifold for recharging. The manifold has high side and low side outlets which are respectively connected to the high or liquid side and the low or vapour side of a compressor. For primary recharging, when the recharging is done properly, the low side outlet is closed, a source of liquid refrigerant is connected to an inlet to the manifold and the high side is charged to a desired level. Once the primary recharging has been completed, the high side or liquid outlet is closed and the vapour side is opened. Refrigerant is fed through a vaporising restrictor connected in series with the manifold. The compressor is energised to cause it to liquefy vapour from the low side and deliver liquid refrigerant to the high side. Top-off is then achieved by delivering vapour to the low side of the system being charged.

Accordingly, there has been a need for a recharging manifold system which can affect primary recharging utilising liquid refrigerant and top-off with vaporised refrigerant without use of a manifold and a restrictor in series with it.

Document US-A-3 785 103 discloses a system according to the preamble of claim 1.

### Summary of Invention

In accordance with aspects of the present invention there is provided a device for charging a system which, when in use, cycles a refrigerant between liquid and gaseous states, the device comprising: -
a housing ; said housing enclosing a manifold portion and a phase change portion, the housing defining a flow passage extending from an inlet to high and low side outlets;
said manifold portion having at least one passageway for establishing fluid communication between a refrigerant inlet and respective high and low side outlets for connection to a refrigeration system;
said phase change portion being upstream of said manifold portion for receiving refrigerant from said inlet and providing a conduit for said refrigerant from said inlet to said manifold portion, said phase change portion including means for selectively conveying liquid refrigerant to said manifold portion, and for flashing said liquid refrigerant to a gaseous state and conveying said gaseous refrigerant to said manifold portion;
wherein the valve, when in the open position, enables concurrent refrigerant flow through both the section of the passage and the capillary to the high side outlet, to thereby charge such a system with refrigerant in a liquid state,
wherein the valve, when in the closed position, sufficiently blocks the section of the passage such that substantially all refrigerant flow is through the capillary, to thereby enable charging such a system through the low side outlet with a refrigerant in a gaseous state.

Also in accordance with aspects of the present invention there is provided a process of charging a heat exchange mechanism with refrigerant comprising:
9. connecting an inlet of a manifold to a source of liquid refrigerant;
2. connecting outlets of the manifold to high and low side of the mechanism;
3. opening a phase control valve to establish liquid refrigerant communication through a now open passage to at least one of the outlets;
4. introducing refrigerant under pressure to the manifold to establish refrigerant flow through both the open passage and a parallel capillary within the manifold;
5. subsequently closing the phase control valve to shut off a principle liquid flow path through the passage to at least a selected one of the outlets; and
6. continuing the charging with flow through the capillary to produce vaporised refrigerant until a desired quantity of refrigerant has been charged into the mechanism.

Other aspects of the present invention are defined in the dependant claims.

### Brief Description of Drawings

Figure 1 is an exploded view of one embodiment of a manifold device embodying the present invention;
Figure 2 is an exploded view of a retrofit embodiment embodying the present invention;
Figure 3 is a partially sectioned view of the embodiment of Figure 2;
Figure 4 is a perspective view on an enlarged scale of the capillary ring or annulus preferably used in all embodiments;
Figure 5 is an elevational view of the capillary ring;
Figures 6 through 9 are alternate embodiments of the annulus showing alternate capillary passages.
Figure 10 is a cross sectional view of the now preferred construction;
Figures 11A-D are fragmentary cross sectional views of alternate arrangements for maintaining the capillary annulus in appropriate axial positions; and,
Figure 12 is a sectional view of a check valve equipped embodiment for use in vacuum applications.

### Best Mode for Carrying Out the Invention

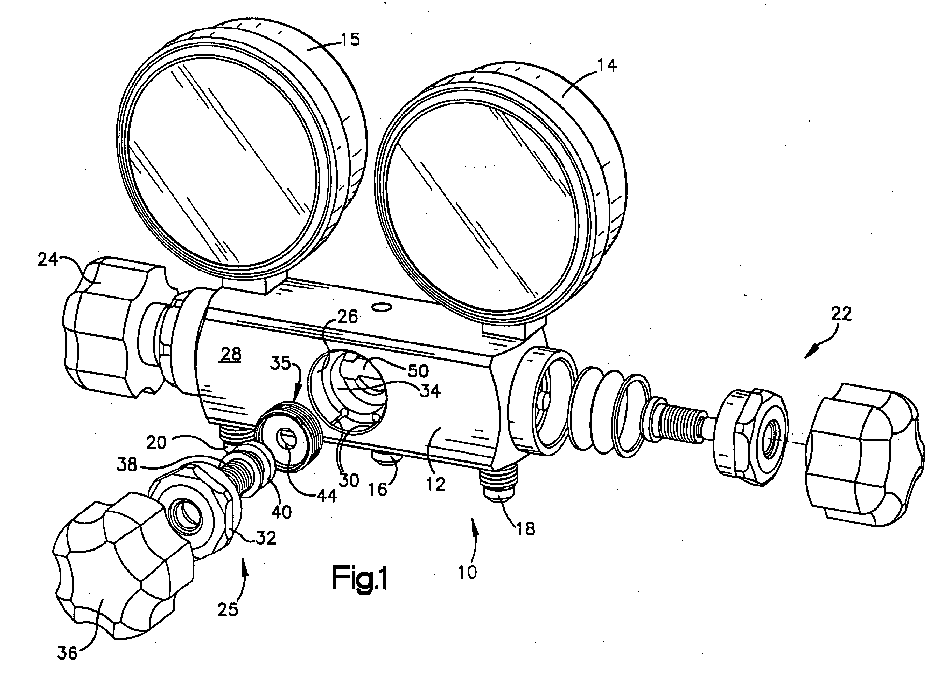

Referring to the drawings and to Figure 1 in particular, an embodiment which is now an alternate embodiment is shown. In this embodiment a manifold is shown generally at 10. The manifold includes a housing 12. High and low side pressure gauges 14, 15 are carried by the housing. The gauges supply pressure readings of high and low sides of a connected heat transfer system.

The manifold 10 includes an inlet 16 for connection to a supply of refrigerant, typically a freon compound. The manifold also includes high and low side outlets 18, 20 for delivering refrigerant to a connected system. High and low side outlet control valves 22, 24 are connected to opposite ends of the elongate manifold 12 for selectively establishing and interrupting fluid communication from outlet passages within the manifold to the respective outlets 18, 20.

A refrigerant state control assembly is shown generally at 25. A counter bore 26 is provided centrally of the manifold 12 in a manifold face 28 which is the forward face as viewed in Figure 1. A pair of drilled holes 30 are provided at the base of the counter bore 26. The drilled holes 30 are passages in direct communication with the inlet 16 for providing liquid refrigerant into a space defined by the counter bore and the state control assembly 25.

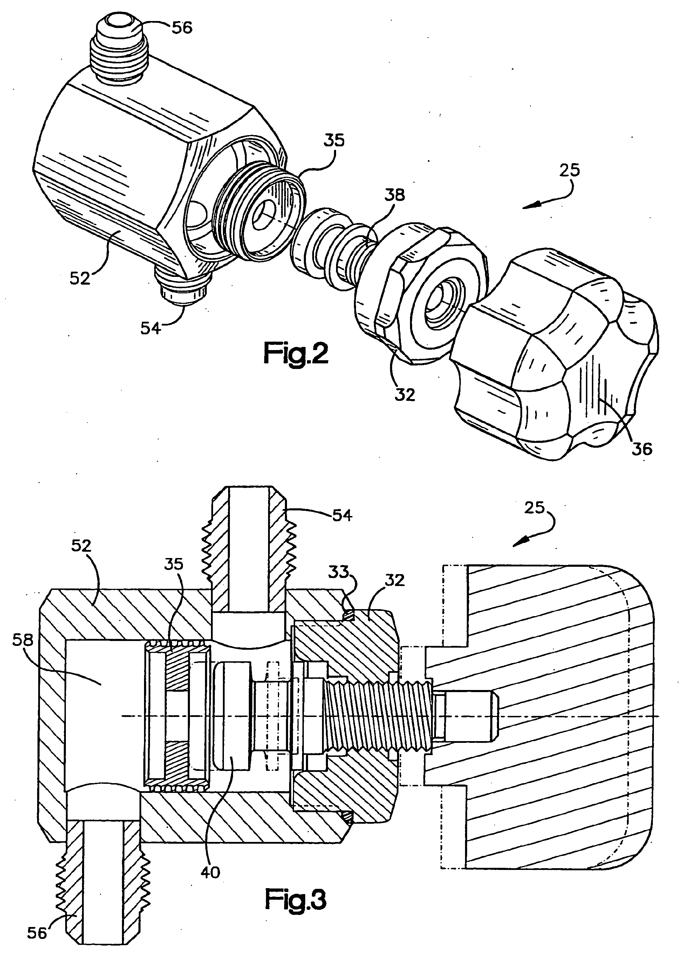

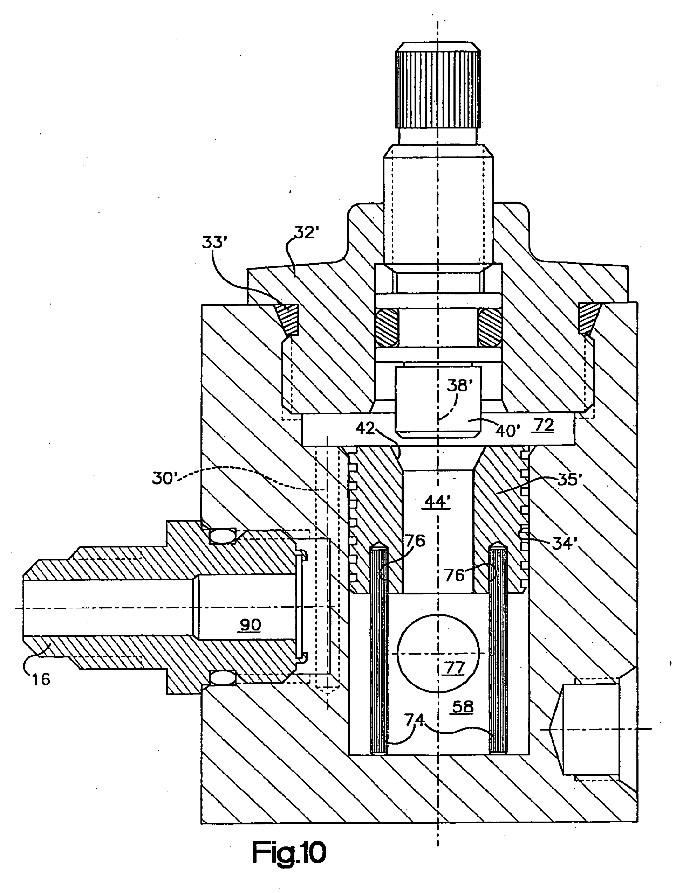

The assembly 25 includes a mounting fitting 32 which is threadedably received in the counter bore 26 to secure the assembly 25 to the manifold. An O ring is provided to effect a seal between the fitting 32 and the housing 12. While not visible in other of the drawings, such an O ring is shown at 33 and 33' in Figures 3 and 10. The manifold also includes a second and reduced size counter bore 34. The second counter bore 34 is axially aligned and in communication with the counter bore 26. A capillary ring or annulus 35 is positioned within the second counter bore 34 and seated against the base of the counterbore 34.

The assembly 25 includes a knob 36 connected to a valve stem 38. Rotation of the knob 36 and the connected stem 38, shifts a valve member 40 into and out of engagement with a face surface 42 of the annulus 35. Coaction of the valve member 40 and the face surface 42 selectively establishes and interrupts flow communication through an outlet passage 44 formed in the annulus 35. The outlet passage 44 is coaxial with the annulus 35.

In its presently preferred form, the annulus 35 has a perimetral helix 46 which is in close association with the walls defining the second counter bore 34. The walls of the counter bore 34 and the helix 46 coact to provide a helical passage 48 in the perimeter of the annulus 35. The helical passage 48 provides fluid communication between the inlet holes 30 and a central, state control outlet 50 provided at a base of the second counter bore 34. The state control outlet 50 communicates via internal passages in the manifold 12 with the high and low side outlets 18, 20.

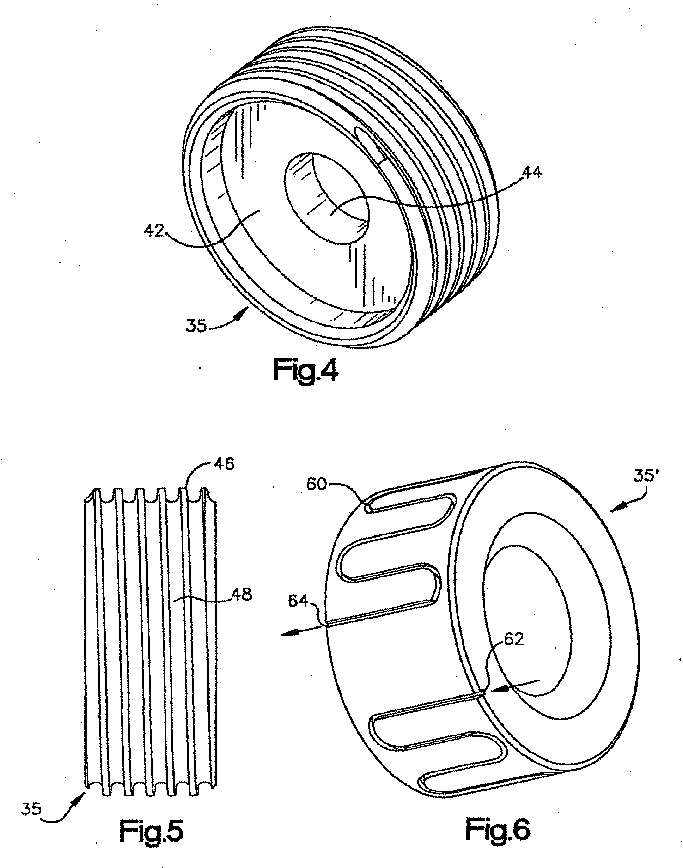

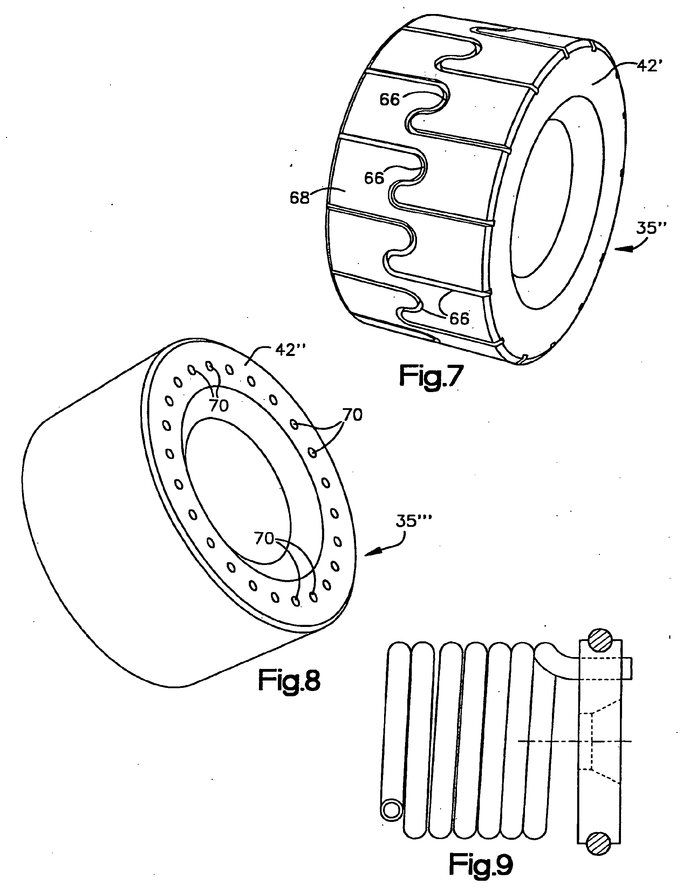

In Figures 6 through 8, alternate annuli 35', 35", 35"' are shown. In the embodiment of Figure 6, a sinusoidal helical groove 60 is provided. The groove extends from an inlet 62 around the perimeter of the annulus 35' to an outlet at 64. Figure 9 shows a further alternate capillary system in the form of a helically wound tube.

In the embodiment of Figure 7, a plurality of generally S-shaped grooves 66 are provided. Each of these grooves extends from an inlet adjacent the face surface 42' across an outer surface 68 of the annulus 35" to an outlet at an axially opposite face of the annulus. The annuli 35' and 35", like the annulus 35, have perimetral grooves that coact with the cylindrical surface of the second counter bore 34 to define capillary paths.

In the embodiment of Figure 8, a plurality of capillary passages 70 extend through the annulus 35"'. The passages 70 each have an axis which parallels the axis of the annulus 35"' so that capillary flow is from the face 42"' to an opposite face through each of the passages 70.

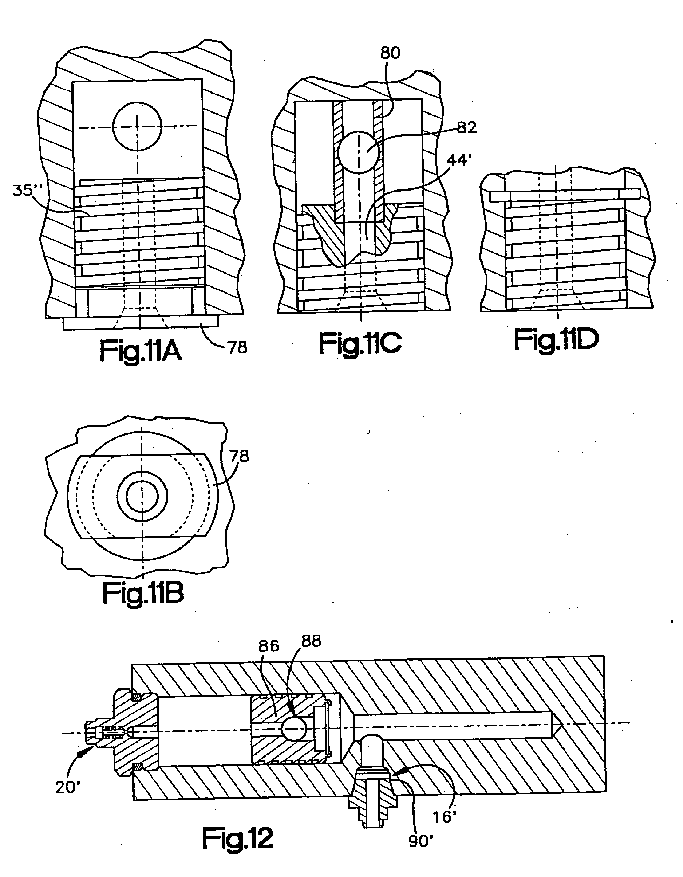

Referring now to Figures 2 and 3, a retrofit unit is shown. The retrofit unit is designed for connection to an existing prior art charging manifold to convert it to a manifold which can be used for charging refrigerant into a system either in liquid or vapor state. The retrofit unit includes a housing or body 52. An inlet 54 is provided for a connection to a source of refrigerant. A refrigerant state control assembly 25, which is identical to the assembly of Figure 1, is provided. The assembly 25 includes the mounting fitting 32 which is connected to the body 52. The valve member 40 coacts with the annulus 35 in a manner identical to the coaction in the embodiment of Figure 1 except that a selected one of the props of Figures 10 and 11 is used but not shown. An outlet fitting 56 is connected to the body 52 and in fluid communication with the outlet of the refrigerant state control assembly. The outlet fitting 56 is adapted for connection to an inlet of a conventional and prior art manifold.

When the valve member 40 is seated against the face surface 42, the helical passage 48 functions as a capillary converting liquid refrigerant to its vapor state. An outlet from the capillary communicates with an expansion space 58, visible in Figures 3 and 10 a corresponding expansion chamber, not shown, is within the manifold body or housing 12 of Figure 1. The expansion space assures full vaporization of the refrigerant. Similarly, the pair of small inlet holes or passages 30 rather than a single hole of comparable cross-sectional area contribute to the efficient operation of the capillary action to assure full vaporization.

Referring now to Figure 10, a now preferred embodiment is shown. In this embodiment like reference numerals to the numerals used in connection with the Figure 1 embodiment are used with primes added where there are differences. In this embodiment, refrigerant is introduced through the inlet 16 and is directed through two passages 30', only one of which is shown in Figure 10, to a space 72 above the capillary annulus 35'.

The annulus 35' is positioned in a bore 34' as distinguished from the counter bore 34 of Figure 1. This modification eliminates a shoulder against which the annulus of Figure 1 rests and thus omits a source of turbulence in fluid flow as refrigerant gasses exit the capillary. In order to maintain position of the annulus 35', a pair of props 74 are provided. These props are interposed between bores 76 in the annulus and the base of the bore 34' and thus extend through an expansion space which is below the annulus 35' and in communication with an outlet 77. The outlet extends in both directions from the expansion space to communicate with the outlets 18, 20.

Figures 11 a-d show alternate arrangements for the props 74 to maintain the capillary in position against closing forces of the valve member 40'. Specifically in Figure 11 a and 11 b a cap extension 78 of the capillary 35" overlies the base of the space 44. In the embodiment of Figure 11, a tube 80 replaces the prop 74. The tube is in communication with the annulus central passage 44' and has a cross bore or ground away side portions to provide outlet ports 82. In Figure 11d a snap ring 84 provides a seat for the annulus 35"'.

In Figure 12 a further alternate embodiment is shown. Here a capillary annulus carries a check valve 88. When liquid is being charged the flow is from the inlet 16' to a high side outlet, not shown. The low side outlet 20' will be closed at that time. When it is desired to provide refrigerant vapor to the low side, the high side outlet is closed, the low side outlet 20 prime is opened and a flow occurs around the capillary 86 but not through its axial passage because of the presence of the check valve 88. When it is desired to draw a vacuum on the system the check valve 88 will open allowing the low side to be evacuated as well as the high side.

### Operation

In operation with current refrigerants the device of Figure 1, the inlet fitting 16 is connected to a source of refrigerant in its liquid state. The high and low side outlets 18, 20 are respectively connected to a system being charged typically following evacuation of that system. The high side valve 22 is opened as is the valve of the refrigerant state control assembly 25. The low side valve 24 is closed.

Liquid refrigerant is fed from the inlet 16 through a filter 90, Figure 10, to the supply holes 30. While not shown in the drawings all inlets and outlets of all embodiments are preferably similarly equipped with filters. The refrigerant then flows primarily through the axial passage 44 and also through the capillary helical passage 48 to the expansion chamber 58, 58' and thence through the outlet 50 or 77. Refrigerant flows from the outlet 50 or 77 through internal passages in the manifold to the high side outlet 18. Flow is continued until a predetermined quantity of refrigerant has been supplied to the high side of a system being charged.

Once the predetermined quantity of refrigerant has been charged into the system high side, the knob 36 is rotated to bring the valve member 40, 40' into flow interrupting contact with the annulus face 42, 42'. The high side valve 22 is closed and the low side valve 24 is opened. The compressor of the system being charged is energized to cause the compressor to operate. Thereafter, flow continues but only through the helical passage 48 which functions as a capillary to change the refrigerant being charged from its liquid to its gaseous state. Vapor charging continues until the system is fully charged.

Although the invention has been described in its preferred form with a certain degree of particularity, it is understood that the present disclosure of the preferred form has been made only by way of example and that numerous changes in the details of construction, operation and the combination and arrangement of parts may be resorted to without departing from the scope of the invention as hereinafter claimed.

## Claims

1. A device for charging a system which, when in use, cycles a refrigerant between liquid and gaseous states, the device comprising:
a housing (12); said housing enclosing a manifold portion (58) and a phase change portion (25), the housing (12) defining a flow passage extending from an inlet to high and low side outlets;
said manifold portion (58) having at least one passageway (30) for establishing fluid communication between a refrigerant inlet (16) and respective high (18) and low (20) side outlets for connection to a refrigeration system;
**characterised in that** :
said phase change portion is upstream of said manifold portion for receiving refrigerant from said inlet and providing a conduit for said refrigerant from said inlet to said manifold portion, said phase change portion includes means (44) for selectively conveying liquid refrigerant to said manifold portion, and for flashing (48) said liquid refrigerant to a gaseous state and conveying said gaseous refrigerant to said manifold portion;
a structure (35) within the housing defines a capillary (26, 46, 60, 66, 70) in parallel communication with a section of the passage; and
a valve (40) connected to the housing and having open and closed positions,
when in the open position, enables concurrent refrigerant flow through both the section of the passage and the capillary to the high side outlet, to thereby charge such a system with refrigerant in a liquid state,
when in the closed position, sufficiently blocks the section of the passage such that substantially all refrigerant flow is through the capillary, to thereby enable charging such a system through the low side outlet with a refrigerant in a gaseous state.

2. A device as claimed in claim 1 wherein the structure is an annular ring (35) having a perimetral surface defining a capillary flow path (46, 60).

3. A device as claimed in claim 2 wherein the flow path (46) is helical.

4. A device as claimed in claim 2 wherein the flow path (60) is sinusoidal.

5. A device as claimed in claim 1 wherein the structure includes a plurality of through capillary passages (70).

6. A device as claimed in any preceding claim comprising a pair of outlet valves (20,24) associated with the high (18) and low (20) side outlets, respectively, each outlet valve being adapted to close an associated and different one of the high and low side outlets.

7. A device as claimed in any preceding claim wherein the manifold housing has inlet (16) and outlet (18) connector portions for facile connection between a source of refrigerant and such a system.

8. A device as claimed in claim 1 wherein the structure is an annulus (35) defining the capillary (46, 60) and the section of the flow passage (44).

9. A device as claimed in claim 8 wherein the capillary is defined by a helix (46) formed on a perimetral surface of the annulus.

10. A process of charging a heat exchange mechanism with refrigerant comprising: -
a. connecting an inlet of a manifold to a source of liquid refrigerant;
b. connecting outlets of the manifold to high and low sides of the mechanism;
c. opening a phase control valve to establish liquid refrigerant communication through a now open passage to at least one of the outlets;
d. introducing refrigerant under pressure to the manifold to establish refrigerant flow through both the open passage and a parallel capillary within the manifold;
e. subsequently closing the phase control valve to shut off a principle liquid flow path through the passage to at least a selected one of the outlets; and
f. continuing the charging with flow through the capillary to produce vaporised refrigerant until a desired quantity of refrigerant has been charged into the mechanism.

11. A process as claimed in claim 10 wherein outlet control valves are provided and at least one of the outlet control valves is closed to prevent flow through the at least one valve during at least a portion of the charging.

12. A process as claimed in claim 11 wherein said at least one of the outlet control valves controls the outlet connected to the mechanism high side.

13. A process as claims in claim 12 wherein the flow of liquid refrigerant when the phase control valve is open is through both the principle flow path and the capillary.

## Patentansprüche

1. Vorrichtung zum Befüllen eines Systems, das im Betrieb ein Kühlmittel zwischen einem flüssigem Zustand und einem gasförmigen Zustand zirkulieren lässt, wobei die Vorrichtung aufweist:
ein Gehäuse (12), das einen Verteiler-Abschnitt (58) und einen Phasenänderungs-Abschnitt (25) umschließt, wobei das Gehäuse (12) einen Strömungsdurchtritt bestimmt, der sich von einem Einlass zu einem hochseitigen Auslass und einem tiefseitigen Auslass erstreckt;
wobei der Verteiler-Abschnitt (58) mindestens einen Durchtritt (30) hat, um eine Fluidverbindung zwischen einem Kühlmittel-Einlass (16) und einem hochseitigen Auslass (18) bzw. einem ti.efseitigen Auslass (20) für die Verbindung mit einem Kühlsystem herzustellen;
**dadurch gekennzeichnet, dass**
der Phasenänderungs-Abschnitt sich stromaufwärts von dem Verteiler-Abschnitt befindet, um Kühlmittel von dem Einlass aufzunehmen, und einen Kanal für das Kühlmittel von dem Einlass zu dem Verteiler-Abschnitt bildet, wobei der Phasenänderungs-Abschnitt ein Mittel (44) enthält, um flüssiges Kühlmittel selektiv zu dem Verteiler-Abschnitt zu befördern, um eine Schnellverdampfung (48) des flüssigen Kühlmittels in einen gasförmigen Zustand zu bewirken und das gasförmige Kühlmittel zu dem Verteiler-Abschnitt zu befördern; wobei
eine Struktur (35) innerhalb des Gehäuses eine Kapillare (26, 46, 60, 66, 70) in paralleler Verbindung mit einem Abschnitt des Durchtritts bestimmt; und
wobei ein Ventil (40), das mit dem Gehäuse verbunden ist und eine Öffnungs- sowie eine Schließ-Stellung hat,
in seiner Öffnungs-Stellung eine gleichzeitige Kühlmittel-Strömung sowohl durch den Abschnitt des Durchtritts und die Kapillare zu dem hochseitigen Auslass ermöglicht, um **dadurch** ein solches System mit Kühlmittel in einem flüssigen Zustand zu befüllen, und
in seiner Schließ-Stellung den Abschnitt des Durchtritts ausreichend blockiert, so dass im wesentlichen die gesamte Kühlmittel-Strömung durch die Kapillare erfolgt, um **dadurch** das Befüllen eines solchen Systems durch den tiefseitigen Auslass mit einem Kühlmittel in einem gasförmigen Zustand zu ermöglichen.

2. Vorrichtung nach Anspruch 1, **dadurch gekennzeichnet, dass** die Struktur ein Kreisring (35) mit einer peripheren Fläche ist, die einen Kapillar-Strömungsweg (46, 60) bestimmt.

3. Vorrichtung nach Anspruch 2, **dadurch gekennzeichnet, dass** der Strömungsweg (46) helixförmig ist.

4. Vorrichtung nach Anspruch 2, **dadurch gekennzeichnet, dass** der Strömungsweg (60) sinusförmig ist.

5. Vorrichtung nach Anspruch 1, **dadurch gekennzeichnet, dass** das Gebilde eine Vielzahl von Kapillar-Durchtritten (70) enthält.

6. Vorrichtung nach einem der vorhergehenden Ansprüche, mit einem Paar Auslass-Ventilen (20, 24), die dem hochseitigen Auslass (18) bzw. dem tiefseitigen Auslass (20) zugeordnet sind, wobei jedes Auslass-Ventil dafür ausgelegt ist, um einen zugeordneten und anderen Auslass des hochseitigen und tiefseitigen Auslasses zu schließen.

7. Vorrichtung nach einem der vorhergehenden Ansprüche, **dadurch gekennzeichnet, dass** das Verteiler-Gehäuse einen Einlass-Verbindungsabschnitt (16) und einen Auslass-Verbindungsabschnitt (18) hat, um eine einfache Verbindung zwischen einer Kühlmittel-Quelle und einem solchen System zu ermöglichen.

8. Vorrichtung nach Anspruch 1, **dadurch gekennzeichnet, dass** das Gebilde ein Kreisring (35) ist, der die Kapillare (46, 60) und den Abschnitt des Strömungsdurchtritts (44) bestimmt.

9. Vorrichtung nach Anspruch 8, **dadurch gekennzeichnet, dass** die Kapillare durch eine Helix (46) bestimmt ist, die an einer Umfangsfläche des Kreisrings gebildet ist.

10. Verfahren zum Befüllen einer Wärmetauscher-Mechanik mit Kühlmittel, welches die folgenden Schritte aufweist:
a. Verbinden eines Einlasses eines Verteilers mit einer Quelle für Flüssigkühlmittel;
b. Verbinden von Auslässen des Verteilers mit einem hochseitigen Auslass und einem tiefseitigen Auslass der Mechanik;
c. Öffnen eines Phasensteuerungs-Ventils, um eine Flüssigkühlmittel-Verbindung durch einen nun offenen Durchtritt zu mindestens einem der Auslässe herzustellen;
d. Einleiten von Kühlmittel unter Druck in den Verteiler, um eine Kühlmittel-Strömung durch sowohl den offenen Durchtritt als auch eine parallele Kapillare innerhalb des Verteilers herzustellen;
e. anschließendes Schließen des Phasensteuerungs-Ventils, um einen Flüssigkeits-Hauptströmungsweg durch den Durchtritt zu mindestens einem ausgewählten Auslass der Auslässe zu sperren; und
f. Fortsetzen des Befüllens mit einer Strömung durch die Kapillare, um verdampftes Kühlmittel zu erzeugen, bis eine gewünschte Menge an Kühlmittel in die Mechanik gefüllt worden ist.

11. Verfahren nach Anspruch 10, **dadurch gekennzeichnet, dass** Auslass-Steuerungsventile vorgesehen sind und dass mindestens eines der Auslass-Steuerungsventile geschlossen wird, um eine Strömung durch das mindestens eine Ventil während mindestens eines Teils des Befüllens zu verhindern.

12. Verfahren nach Anspruch 11, **dadurch gekennzeichnet, dass** mindestens eines der Auslass-Steuerungsventile den Auslass steuert, der mit dem hochseitigen Auslass der Mechanik verbunden ist.

13. Verfahren nach Anspruch 12, **dadurch gekennzeichnet, dass** die Strömung des Flüssigkühlmittels bei geöffnetem Phasensteuerungs-Ventil durch sowohl den Hauptströmungsweg als auch die Kapillare erfolgt.

## Revendications

1. Dispositif pour charger un système qui, en service, recycle un réfrigérant entre état liquide et état gazeux, le dispositif comprenant :
un boîtier (12) , ledit boîtier englobant une partie collectrice (58) et une partie de changement de phase (25), le boîtier (12) définissant un passage d'écoulement s'étendant d'une entrée à des sorties côté haut et côté bas ;
ladite partie collectrice (58) ayant au moins une voie de passage (30) pour établir une communication de fluide entre une entrée de réfrigérant (16) et des sorties respectives côté haut (18) et côté bas (20) pour raccorder à un système de réfrigération ;
**caractérisé en ce que** :
ladite partie de changement de phase se trouve en amont de ladite partie collectrice pour recevoir du réfrigérant de ladite entrée et pour fournir un conduit pour ledit réfrigérant de ladite entrée à ladite partie collectrice, ladite partie de changement de phase comprend des moyens (44) pour acheminer sélectivement du réfrigérant liquide à ladite partie collectrice, faire passer par vaporisation éclair (48) ledit réfrigérant liquide à l'état gazeux et acheminer ledit réfrigérant gazeux à ladite partie collectrice ;
une structure (35) à l'intérieur du boîtier définit un capillaire (26, 46, 60, 66, 70) en communication parallèle avec une section du passage ; et
une soupape (40) raccordée au boîtier et ayant des positions ouverte et fermée,
soupape qui, en position ouverte, permet un écoulement simultané de réfrigérant à travers à la fois la section du passage et le capillaire vers la sortie côté haut pour charger de la sorte ce système avec un réfrigérant à l'état liquide,
et qui, en position fermée, bloque suffisamment la section du passage de manière que sensiblement tout le réfrigérant s'écoule à travers le capillaire pour permettre de la sorte de charger ce système avec un réfrigérant à l'état gazeux par la sortie côté bas.

2. Dispositif selon la revendication 1, dans lequel la structure est une bague annulaire (35) ayant une surface périmétrique définissant un trajet d'écoulement capillaire (46, 60).

3. Dispositif selon la revendication 2, dans lequel le trajet d'écoulement (46) est hélicoïdal.

4. Dispositif selon la revendication 2, dans lequel le trajet d'écoulement (60) est sinusoïdal.

5. Dispositif selon la revendication 1, dans lequel la structure comprend une pluralité de passages capillaires traversants (70).

6. Dispositif selon l'une quelconque des revendications précédentes, comprenant une paire de soupapes de sortie (20, 24) associées aux sorties côté haut (18) et côté bas (20), respectivement, chaque soupape de sortie étant adaptée pour fermer une sortie associée et différente parmi les sorties côté haut et côté bas.

7. Dispositif selon l'une quelconque des revendications précédentes, dans lequel le boîtier collecteur a des parties de raccordement d'entrée (16) et de sortie (18) pour un raccordement aisé entre une source de réfrigérant et un système de ce type.

8. Dispositif selon la revendication 1, dans lequel la structure est une bague annulaire (35) définissant le capillaire (46, 60) et la section du passage d'écoulement (44).

9. Dispositif selon la revendication 8, dans lequel le capillaire est défini par une hélice (46) formée sur une surface périmétrique de l'anneau.

10. Procédé de chargement d'un mécanisme d'échange de chaleur avec un réfrigérant, comprenant les étapes suivantes :
a. on raccorde une entrée d'un collecteur à une source de réfrigérant liquide ;
b. on raccorde des sorties du collecteur aux côtés haut et bas du mécanisme ;
c. ouvrir une soupape de commande de phase pour établir une communication de réfrigérant liquide à travers un passage à présent ouvert avec au moins une des sorties ;
d. introduire un réfrigérant sous pression dans le collecteur pour établir un écoulement de réfrigérant à travers à la fois le passage ouvert et un capillaire parallèle à l'intérieur du collecteur ;
e. fermer ensuite la soupape de commande de phase pour couper un trajet d'écoulement de liquide principal à travers le passage vers au moins l'une sortie choisie; et
f. continuer le chargement par écoulement à travers le capillaire pour produire un réfrigérant vaporisé jusqu'à ce qu'une quantité souhaitée de réfrigérant ait été chargée dans le mécanisme.

11. Procédé selon la revendication 10, dans lequel des soupapes de commande de sortie sont prévues et au moins une des soupape de commande de sortie est fermée pour empêcher l'écoulement à travers la au moins une soupape durant au moins une partie du chargement.

12. Procédé selon la revendication 11, dans lequel ladite au moins une des soupapes de commande de sortie commande la sortie raccordée au côté haut du mécanisme.

13. Procédé selon la revendication 12, dans lequel l'écoulement de réfrigérant liquide, lorsque la soupape de commande de phase est ouverte, se fait à travers le trajet d'écoulement principal et le capillaire.
